# EUROPEAN PATENT APPLICATION

(11) **EP 1 225 005 A1**
(43) Date of publication of application: **24.07.2002**
(21) Application number: 02001345.4
(22) Date of filing: 18.01.2002
(51) Int. Cl.: B23Q 11/10

(54) **Machining method and mist supplying apparatus for use in the method**

(30) Priority: 18.01.2001 JP 2001010729
(71) Applicant: ECOREG LTD., Osaka-shi, Osaka 531-0072 (JP)
(72) Inventor: Hara, Mitsugu, Kishiwada-shi, Osaka 596-0827 (JP)
(74) Representative: Frankland, Nigel Howard

(57) **Abstract**

A machining method and a mist supplying apparatus for use in the method, which provide an excellent cooling effect for a rotation shaft without the need for an ejection nozzle. The machining method comprises the steps of: providing a machine tool which includes a rotation shaft (2) rotatably supported by a casing (1) ; causing compressed air and a liquid to separately pass through the inside of the casing (1) and into the rotation shaft (2); mixing the liquid with the compressed air within the rotation shaft (2) so as to form the liquid into a mist; feeding the resulting mist along the outer periphery of the tool or through the inside of the tool to a distal end of a generally cylindrical tool fixed to the rotation shaft (2); and supplying the mist to a machining part from the distal end of the tool.

## Description

### BACKGROUND OF THE INVENTION

### Field of the Invention

The present invention relates to a method for performing machining operations on a workpiece such as cutting and grinding operations, and to a mist supplying apparatus for use in the method.

### Description of the Art

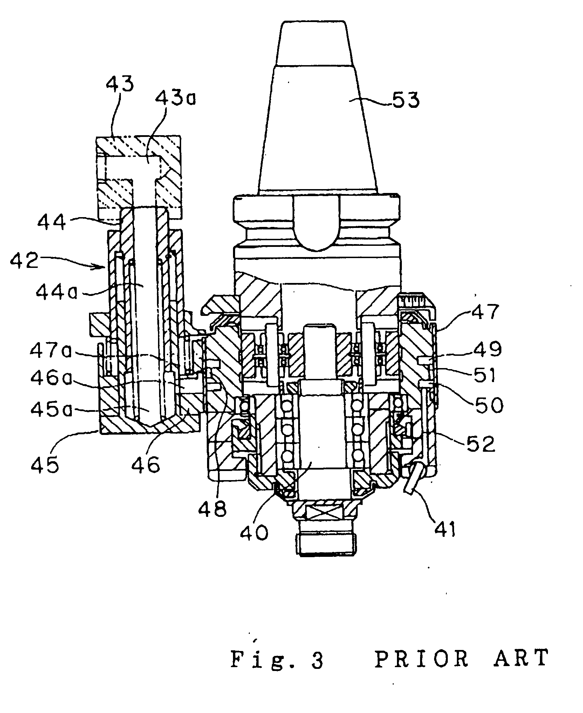

In a machining operation such as a cutting or grinding operation, it is a conventional practice to eject a cooling liquid or the like over a machining part from an ejection nozzle extending thereto so as to dissipate heat generated by contact between a workpiece and a machining tool. Japanese Unexamined Patent Publication No. 6-198538 (1994), for example, discloses a tool adapter to be incorporated in a planetary roller speed-up gear mechanism as shown in Fig. 3 herein. In the tool adapter, a cutting (grinding) coolant is ejected over a machining part from a cutting (grinding) coolant nozzle 41 when a cutting (grinding) operation is performed with the use of a tool (not shown) attached to a distal end portion of a rotary shaft 40. The cutting (grinding) coolant is supplied to a first communication channel 48 through a supply port 43a of a rotation stopper block 43 of a rotation stopper 42, a center channel 44a of a rotation stopper pin 44, a hollow portion 45a of a guide sleeve 45, a communication channel 46a of a leg 46 and a communication channel 47a of a jacket cover 47. The cutting (grinding) coolant is then supplied to the cutting (grinding) coolant nozzle 41 from the first communication channel 48 through a first circumferential channel 49, a second circumferential channel 50, a second communication channel 51 and a communication channel 52. Thus, the planetary roller speed-up gear mechanism can be cooled with the cutting (grinding) coolant. In Fig. 3, reference numeral 53 denotes a taper shank.

The cooling recently has been achieved by supplying the cooling liquid and the like in a mist form, rather than a liquid, to the machining part. This method tends to eliminate accumulation of the cooling liquid in a machined recess and also a chipping phenomenon occurring due to sudden cooling. Japanese Unexamined Patent Publication No. 9-141537 (1997), for example, proposes a lubricant supplying apparatus and a lubricant supplying method for spraying a lubricant.

However, the aforesaid methods and apparatus require an ejection nozzle, e.g., the cutting (grinding) coolant nozzle 41. Such a requirement correspondingly increases the number of components, and thus makes inventory control more troublesome, and also increase the size of the apparatus. Furthermore, in the case of the tool adapter to be incorporated in the planetary roller speed-up gear mechanism, the rotation shaft 40 cannot sufficiently be cooled, because the cutting (grinding) coolant flows through the channels outside the rotation shaft. In the case of the aforesaid lubricant supplying apparatus and method, a spindle and the like incorporated in a machine tool cannot be cooled at all.

In view of the foregoing, it is an object of the present invention to provide a machining method and a mist supplying apparatus for use in the method, which obviates the need for an ejection nozzle and yet an excellent effect in cooling a rotation shaft is ensured.

### SUMMARY OF THE INVENTION

In accordance with a first aspect of the present invention to achieve the aforesaid object, there is provided a machining method, which comprises the steps of: providing a machine tool which includes a rotation shaft rotatably supported by support means; causing compressed air and a liquid to separately pass through the inside of the support means into the rotation shaft; mixing the liquid with the compressed air within the rotation shaft so as to form the liquid into a mist; feeding the resulting mist along the outer periphery of the tool or through the inside of the tool to a distal end of a generally cylindrical tool fixed to the rotation shaft; and supplying the mist to a machining part from the distal end of the tool.

In accordance with a second aspect of the present invention, there is provided a mist supplying apparatus, which comprises: support means rotatably supporting a rotation shaft; a generally cylindrical tool detachably fixed to the rotation shaft; a compressed air channel and a liquid channel separately provided within the support means, the compressed air channel adapted to be supplied with compressed air from compressed air supply means, the liquid channel adapted to be supplied with a liquid from liquid supply means; the rotation shaft having a channel provided therein for separately receiving the compressed air supplied from the compressed air channel and the liquid supplied from the liquid channel to mix the liquid with the compressed air to form the liquid into a mist form, wherein the resulting mist is fed to a distal end of the tool along the outer periphery of the tool or through the inside of the tool to supply the mist to a machining part from the distal end of the tool.

In the machining method according to the present invention, the machine tool provided includes the rotation shaft rotatably supported by the support means and, when the workpiece is machined, the compressed air and the liquid which are separately passed through the inside of the support means are separately supplied into the rotation shaft. After the liquid is mixed with the compressed air within the rotation shaft so as to be formed into a mist, the resulting mist is fed to the distal end of the generally cylindrical tool fixed to the rotation shaft by passing along the outer periphery of the tool or through the inside of the tool. More specifically, the mist formed within the rotation shaft is fed toward the tool through the inside of the rotation shaft and then along the outer periphery of the tool or through the inside of the tool to the distal end of the tool, so as to be supplied to the machining part from the distal end of the tool in the inventive machining method. Therefore, the need for an ejection nozzle can be obviated, and thus the number of components can be reduced so as to facilitate inventory control and also to reduce the size of the machine tool. Since the compressed air and the liquid are supplied into the rotation shaft, the rotation shaft can be efficiently cooled from the inside thereof by employing a cooling water as the liquid. Thus, an excellent cooling effect can be provided. On the other hand, the mist supplying apparatus according to the present invention provides the same function and effect as the above described inventive machining method.

The term "machining part" herein means, for example, a surface of the tool involved in a machining operation and a surface of a workpiece being machined. Furthermore, in the present invention, the mist may be supplied to the distal end of a tool along the outer periphery of the tool as well as through the inside of the tool.

When a mixture of a cooling liquid and a cutting liquid is supplied as the liquid into the rotation shaft in the inventive machining method, a cooling effect and a lubricating effect can be simultaneously provided to the machining part. When the inventive mist supplying apparatus is adapted to supply the mixture of the cooling liquid and the cutting liquid into the liquid channel, the same function and effect can be ensured.

When the cooling liquid and the cutting liquid are separately supplied as the liquid into the rotation shaft in the inventive machining method, the cooling liquid and the cutting liquid are not mixed until these liquids are introduced into the rotation shaft. Thus, any degradation in the quality of these liquids is suppressed. In addition, the cooling liquid and the cutting liquid are formed into a mist and then mixed with each other within the rotation shaft. Thus, the mixing of the cooling liquid and the cutting liquid is sufficiently carried out, thereby providing excellent cooling and lubricating effects. When the inventive mist supplying apparatus includes a cooling liquid channel and a cutting liquid channel separately provided as the liquid channel and the apparatus is adapted to supply the cooling liquid to the cooling liquid channel from cooling liquid supply means and supply the cutting liquid to the cutting liquid channel from cutting liquid supply means, the same function and effect can be ensured.

### BRIEF DESCRIPTION OF THE DRAWINGS

Fig. 1 is a sectional view illustrating a mist supplying apparatus according to one embodiment of the present invention;
Fig. 2 is a sectional view of a tool holder; and
Fig. 3 is a sectional view of a tool adapter according to the prior art.

### DETAILED DESCRIPTION OF PREFERRED EMBODIMENT

An embodiment of the present invention will hereinafter be described in detail with reference to the attached drawings.

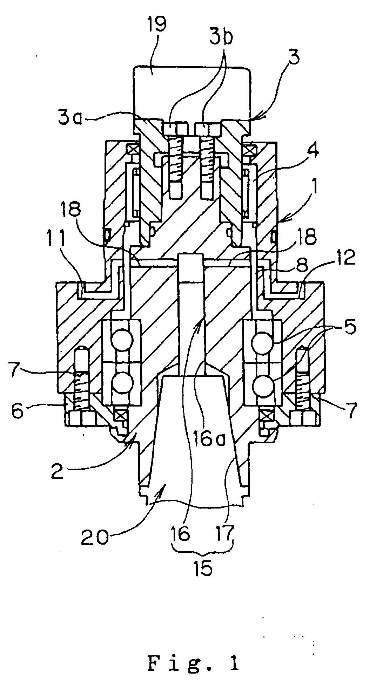

Fig. 1 illustrates a mist supplying apparatus according to one embodiment of the present invention. As shown in Fig. 1, a cylindrical casing 1 is vertically disposed and is adapted to be fixed to a machine tool such as a machining center (not shown). A rotation shaft 2 is vertically disposed within the casing 1. A topped cylindrical connection shaft 3 is fixed around an upper portion of the rotation shaft 2. The connection shaft 3 is rotatably supported within the casing 1 by an upper bearing 4 fixed to an upper portion of an inner peripheral surface of the casing 1, and the rotation shaft 2 is rotatably supported within the casing by a lower bearing 5 fixed to a lower portion of the inner peripheral surface of the casing. In Fig. 1, a cover 6 is removably fixed to a lower end face of the rotation shaft 2 by a plurality of fixing bolts 7 (only two of which are seen in Fig. 1).

A compressed air channel 11, which receives compressed air supplied from compressed air supply means (not shown) having a motor, and a liquid channel 12, which receives a liquid (a mixture of a cooling water and a lubricating oil in this embodiment) supplied from liquid supply means (not shown) having a motor (which may double as the motor for the compressed air supply means), are separately provided in a peripheral wall of the casing 1. One end of the compressed air channel 11 opens into the inner periphery of the casing 1 between the upper and lower bearings 4 and 5. The other end of the compressed air channel 11 opens into the outer periphery of the casing 1 and is connected to the compressed air supply means via a pipe or the like (not shown). One end of the liquid channel 12 opens into the inner periphery of the casing 1 between the upper and lower bearings 4 and 5. The other end of the liquid channel 12 opens into the outer periphery of the casing 1 and is connected to the liquid supply means via a pipe or the like (not shown).

The rotation shaft 2 has a single vertical hole 15 extending vertically and axially therethrough from the lower end face thereof. The vertical hole 15 includes an upper hole portion 16 having a threaded portion 16a provided on an inner peripheral surface thereof, and a lower hole portion (chuck portion) 17 which extends from a lower end of the upper hole portion to the lower end face of the rotation shaft 2 and which is flared downward. The rotation shaft 2 has a plurality of lateral holes 18 (two lateral holes 18 in this embodiment) which extend from an upper portion of the upper hole portion 16 perpendicularly to the axis thereof and open into the outer periphery thereof between the upper and lower bearings 4 and 5. In this embodiment, the vertical hole 15 and the lateral holes 18 constitute an inner channel in the rotation shaft 2. An annular gap 8 is defined between the inner peripheral surface of the casing 1 and the outer peripheral surface of the rotation shaft 2.

A connector 19 projects from an upper end face of the connection shaft 3, and is adapted to be coupled to rotation means such as a motor (not shown) via coupling means such as a belt (not shown). In Fig. 1, a plurality of fixing bolts 3b (two fixing bolts in this embodiment) fix a top wall 3a of the connection shaft 3 to the upper end of the rotation shaft 2.

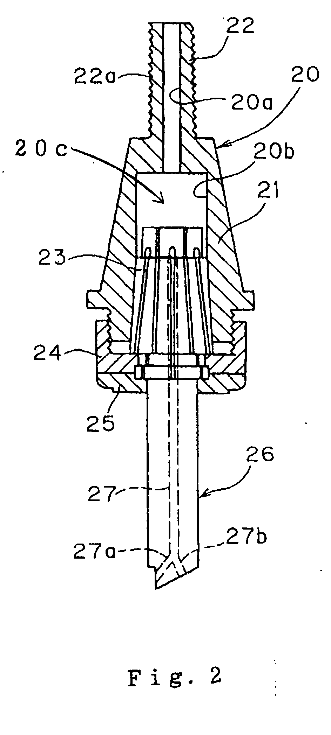

As shown in Fig. 2, a tool holder 20 includes a main portion 21, which is adapted to be removably inserted in the lower hole portion 17 of the vertical hole 15 of the rotation shaft 2 (see Fig. 1), and a connection rod 22 extending upright from an upper end face of the main portion 21. The connection rod 22 has a threaded portion 22a provided on an outer peripheral surface thereof which is adapted to be threadingly engaged with the threaded portion 16a of the upper hole portion 16 of the vertical hole 15 of the apparatus of Fig. 1. The tool holder 20 has a through-hole 20c extending axially therethrough which includes an upper small-diameter portion 20a extending through the connection rod 22 and a lower large-diameter portion 20b extending through the main portion 21 from a lower end face of the main portion 21. The connection rod 22 of the tool holder 20 threadingly engages the upper hole portion 16 of the rotation shaft 2 of the apparatus of Fig. 1, so that the upper hole portion 16 of the rotation shaft 2 and the through-hole 20c of the tool holder 20 are connected in series with the main portion 21 being inserted in the lower hole portion 17 of the rotation shaft 2. with an upper portion of a tool 26 being fitted in the lower large-diameter portion 20b of the through-hole 20c of the tool holder 20, the tool is detachably fixed to a lower end of the tool holder by a collet 23, a clamp nut 24 and a cap 25.

The tool 26 has a bifurcated channel 27 extending downward from an upper end thereof with one branch channel 27a opening into a rake face of the tool 26 and with the other branch channel 27b opening into a flank of the tool. A minute gap which permits passage of a mist mixture as will be described later is defined between an outer peripheral surface of the tool 26 and inner peripheral surfaces of the collet 23, the clamp nut 24 and the cap 25.

With the aforesaid arrangement as shown in Figs. 1 and 2, the compressed air and the liquid are respectively supplied into the compressed air channel 11 and the liquid channel 12 of the casing 1 upon the actuation of the motors of the compressed air supply means and the liquid supply means, and respectively pass through the compressed air channel 11 and the liquid channel 12 so as to be introduced into the lateral holes 18 of the rotating rotation shaft 2 via the gap 8. The compressed air introduced into one of the lateral holes 18 and the liquid introduced into the other lateral hole 18 collide with each other so as to be mixed together in the upper hole portion 16 of the vertical hole 15 and the liquid is atomized into the form of a mist mixture. The resulting mist mixture flows through the upper hole portion 16 of the vertical hole 15 and the upper small-diameter portion 20a and the lower great-diameter portion 20b of the tool holder 20. Most of the mist mixture flows into the channels 27, 27a, 27b of the tool 26 so as to be ejected over the machining part. The remainder of the mist mixture (which has not flowed into the channels 27, 27a, 27b of the tool 26) flows into the minute gap between the outer peripheral surface of the tool 26 and the inner peripheral surfaces of the collet 23, the clamp nut 24 and the cap 25, and then is ejected from this minute gap along the outer periphery of the tool.

In this embodiment, the need for an ejection nozzle is obviated, thereby correspondingly reducing the number of the components and the size of the apparatus. In addition, the liquid (the mixture of the cooling water and the lubricating oil) is supplied into the rotation shaft 2, so that the rotation shaft can be efficiently cooled from the interior thereof. Further, the mist mixture is ejected from the minute gap between the outer peripheral surface of the tool 26 and the inner peripheral surfaces of the collet 23, the fixing nut 24 and the cap 25 along the outer periphery of the tool 26. This makes it possible to protect a shoulder of the tool 26 (e.g., a drill).

Although the tool 26 to be employed is formed with the channels 27, 27a, 27b in the aforesaid embodiment, the construction of the tool is not limited thereto, and a tool formed with none of the channels 27, 27a, 27b may be employed. In the latter tool, only the mist mixture ejected from the minute gap between the outer peripheral surface of the tool 26 and the inner peripheral surfaces of the collet 23, the clamp nut 24 and the cap 25 along the outer periphery of the tool 26 is supplied to the machining part. In the previously discussed embodiment, it is not necessarily required that the mist mixture be supplied from the minute gap along the outer periphery of the tool 26.

Since the cooling effect and the lubricating effect significantly vary depending on the type of the mist, it is preferred to control the mixing ratio between the cooling water and the cutting liquid (lubricating oil) by varying the supply amounts of the cooling water and the cutting liquid introduced into the liquid channel 12, and also to control the pressure of the compressed air supplied into the compressed air channel 11 and the pressure of the cooling water and the cutting liquid supplied into the liquid channel 12. In a high speed cutting operation, for example, the supply amount of the cooling water may be increased to increase the ratio of the cooling water to the cutting liquid for enhancement of the cooling effect. In a low or intermediate speed cutting operation, the supply amount of the cutting liquid may be increased to increase the ratio of the cutting liquid for enhancement of the lubricating effect.

Although tap water is employed as the cooling water in the aforesaid embodiment, the cooling water is not limited thereto, and other examples of suitable cooling water include pure water and ultra-pure water. As the cutting liquid, Bluebe #LB-1 may be employed or, alternatively, any of various ordinary cutting liquids may be employed. Although the cooling water and the cutting liquid are employed as the liquid in the aforesaid embodiment, the liquid may be selected from various types of liquids such as emulsions and chemical agents.

The apparatus according to the present invention can be installed not only in the machining center for machining as in the aforesaid embodiment but also in various machine tools such as numerically controlled (NC) lathes and grinding machines.

In the machining method according to the present invention, the mist generated within the rotation shaft is fed toward the tool through the inside of the rotation shaft, then along the outer periphery of the tool or through the inside of the tool to the distal end of the tool, and then be supplied to a machining part from the distal end of the tool. Therefore, the need for an ejection nozzle can be obviated, whereby the number of the components can correspondingly be reduced so as to facilitate inventory control and also to reduce the size of the machine tool. Since compressed air and liquid are supplied into the rotation shaft, the rotation shaft can be efficiently cooled from the inside thereof by employing cooling water as the liquid. Thus, an excellent cooling effect can be provided. Additionally, the mist supplying apparatus according to the present invention provides the same function and effect as the inventive machining method.

When a mixture of cooling liquid and cutting liquid is supplied as the liquid into the rotation shaft in the inventive machining method, the cooling effect and the lubricating effect can be provided simultaneously to the machining part. When the inventive mist supplying apparatus is adapted to supply the mixture of the cooling liquid and the cutting liquid into the liquid channel, the same function and effect can be ensured.

When the cooling liquid and the cutting liquid are separately supplied as the liquid into the rotation shaft in the inventive machining method, the cooling liquid and the cutting liquid are not mixed until these liquids are introduced into the rotation shaft, so that degradation in the quality of these liquids is suppressed. In addition, the cooling liquid and the cutting liquid are formed into a mist and then mixed with each other within the rotation shaft. Thus, the mixing of the cooling liquid and the cutting liquid is sufficiently carried out, thereby providing excellent cooling and lubricating effects. When the inventive mist supplying apparatus includes a cooling liquid channel and a cutting liquid channel separately provided as the liquid channel and the cooling liquid to the cooling liquid channel is adapted to be supplied from cooling liquid supply means and supply the cutting liquid to the cutting liquid channel is adapted to be supplied from cutting liquid supply means, the same function and effect can be ensured.

The features disclosed in the foregoing description, in the claims and/or in the accompanying drawings may, both separately and in any combination thereof, be material for realising the invention in diverse forms thereof.

## Claims

1. A machining method comprising the steps of:
providing a machine tool which includes a rotation shaft rotatably supported by support means;
causing compressed air and a liquid to separately pass through the inside of the support means into the rotation shaft;
mixing the liquid with the compressed air within the rotation shaft so as to form the liquid into a mist;
feeding the resulting mist along the outer periphery of the tool or through the inside of the tool to a distal end of a generally cylindrical tool fixed to the rotation shaft; and
supplying the mist to a machining part from the distal end of the tool.

2. A machining method as set forth in claim 1, wherein the liquid passing into the rotation shaft is a mixture of a cooling liquid and a cutting liquid.

3. A machining method as set forth in claim 1, wherein the liquid passing into the rotation shaft is a cooling liquid and a cutting liquid separately supplied.

4. A mist supplying apparatus comprising:
support means rotatably supporting a rotation shaft;
a generally cylindrical tool detachably fixed to the rotation shaft;
a compressed air channel and a liquid channel separately provided within the support means, the compressed air channel adapted to be supplied with compressed air from compressed air supply means, the liquid channel adapted to be supplied with a liquid from liquid supply means;
the rotation shaft having a channel provided therein for separately receiving the compressed air supplied from the compressed air channel and the liquid supplied from the liquid channel to mix the liquid with the compressed air to form the liquid into a mist;
wherein the resulting mist is fed to a distal end of the tool along the outer periphery of the tool or through the inside of the tool to supply the mist from the distal end of the tool onto a machining part.

5. A mist supplying apparatus as set forth in claim 4, wherein the liquid supplied into the liquid channel is a mixture of a cooling liquid and a cutting liquid.

6. A mist supplying apparatus as set forth in claim 4,
wherein the liquid channel includes a cooling liquid channel and a separate cutting liquid channel,
wherein a cooling liquid is supplied into the cooling liquid channel from cooling liquid supply means, and a cutting liquid is supplied into the cutting liquid channel from cutting liquid supply means.
